(19) Europäisches Patentamt
European Patent Office
Office européen des brevets

(11) **EP 1 892 174 A1**

(12) **EUROPEAN PATENT APPLICATION**

(43) Date of publication:
**27.02.2008 Bulletin 2008/09**

(51) Int Cl.:
***B62D 5/04*** *(2006.01)*

(21) Application number: **07016666.5**

(22) Date of filing: **24.08.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **25.08.2006 JP 2006229624**

(71) Applicant: **NSK Ltd.
Tokyo 141-8560 (JP)**

(72) Inventors:
• **Kobayashi, Hideyuki
Maebashi-shi
Gunma 371-8527 (JP)**
• **Jiang, ChunHao
Maebashi-shi
Gunma 371-8527 (JP)**

(74) Representative: **Grünecker, Kinkeldey,
Stockmair & Schwanhäusser
Anwaltssozietät
Maximilianstrasse 58
80538 München (DE)**

(54) **Electric power steering device**

(57)    This invention provides an electric power steering device in which a steering assist force is applied to a steering system of a vehicle using a motor. The electric power steering device includes a first calculating part (31) for calculating a steering assist command value based on a steering torque $(T_h)$ and a vehicle speed $(V_h)$, a drive control part that controls drive of the motor based on the steering assist command value, a second calculating part (40) for calculating a steering assist command limit value based on a source voltage (V) and a motor rotating speed $(\omega)$, and a limiting part (41) for limiting steering assist command value based on the steering assist command limit value.

*FIG. 1*

**Description**

This application is based on and claims priority from Japanese Patent Application No. 2006-229624, filed on Aug. 25, 2006, the entire contents of which are hereby incorporated by reference.

BACKGROUND OF THE INVENTION

1. Technical Field

The present invention relates to an electric power steering device for applying a steering assist force to a steering system of a vehicle, and more particularly to an electric power steering device that can prevent a source voltage from being excessively lowered by limiting supplied electric power from the power source of the vehicle.

2. Background Art

The electric power steering device for applying a steering assist force using the rotating force of a motor has been widely used to lightly operate a steering wheel of a vehicle. This electric power steering device exerts the assist force on a steering shaft or a rack shaft by the driving force of the motor using a transmitting mechanism such as a gear or a belt through a reduction gear.

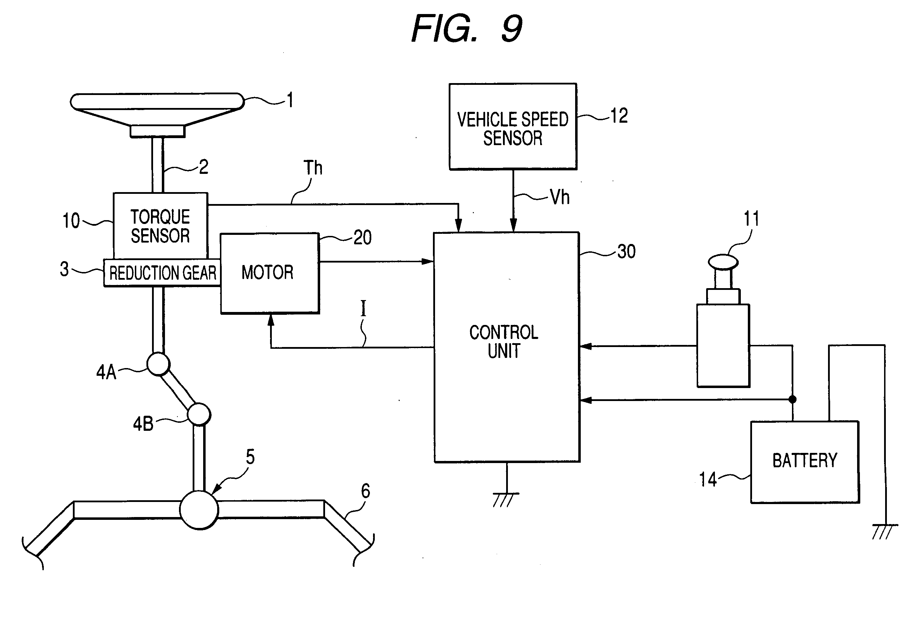

An ordinary structure of such an electric power steering device is shown in Fig. 9. A column shaft 2 of a steering wheel 1 is connected to a tie rod 6 of a steering wheel via a reduction gear 3, universal joints 4A and 4B and a pinion rack mechanism 5. In the column shaft 2, a torque sensor 10 is provided for detecting the steering torque of the steering wheel 1. A motor 20 for assisting the steering force of the steering wheel 1 is connected to the column shaft 2 through the reduction gear 3. To a control unit (ECU) 30 for controlling the power steering device, an electric power is supplied from a battery 14 as a power source and an ignition key signal is inputted from an ignition key 11. The control unit 30 calculates a steering assist command value I of an assist command based on an assist map in accordance with the steering torque $T_h$ detected by the torque sensor 10 and a vehicle speed $V_h$ detected by a vehicle speed sensor 12 and controls a current supplied to the motor 20 in accordance with the calculated steering assist command value I.

In the electric power steering device having the above-described structure, the steering torque $T_h$ by the driver's steering transmitted from the steering wheel 1 is detected by the torque sensor 10. The drive of motor 20 is controlled by the steering assist command value calculated based on the detected steering torque $T_h$ or the vehicle speed $V_h$. This drive makes the assist force of the driver's steering operation, so that the driver can operate the handle with light steering. That is, the steering assist command value is calculated from the steering torque $T_h$ outputted by the steering and the vehicle speed $V_h$, and whether a feeling in steering is good or not is determined and the performance of the electric power steering device is greatly influenced depending on how the motor 20 is controlled in accordance with the steering assist command value.

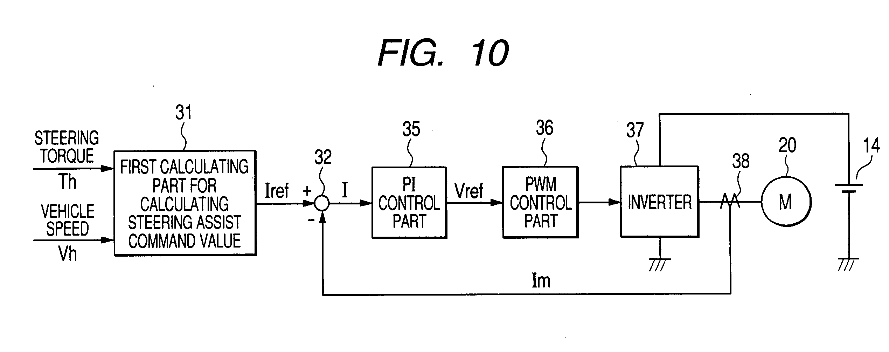

The control unit 30 is mainly composed of a CPU (including an MPU or an MCU) and ordinary functions executed by a program in the CPU are shown in Fig. 10.

The function and operation of the control unit 30 will be described by referring to Fig. 10. The steering torque $T_h$ detected in the torque sensor 10 and the vehicle speed $V_h$ detected by the vehicle speed sensor 12 are inputted to a first calculating part 31 for calculating a steering assist command value $I_{ref}$. The first calculating part 31 uses the assist map in accordance with the inputted steering torque $T_h$ and the vehicle speed $V_h$ to determine the steering assist command value $I_{ref}$ as a control target value of the current supplied to the motor 20. The steering assist command value $I_{ref}$ is inputted to a subtracting part 32 to calculate a deviation I ($I_{ref}$ - $I_m$) between the steering assist command value $I_{ref}$ and a feedback motor current $I_m$. The deviation I is in putted to a PI control part 35 for improving the characteristics of a steering operation. A voltage command value $V_{ref}$ having characteristics improved in the PI control part 35 is inputted to a PWM control part 36. Further, the motor 20 is PWM-driven through an inverter 37 as a driving part. The current value $I_m$ of the motor 20 is detected by a motor current detecting part 38 and fed back to the subtracting part 32.

In the above-described electric power steering device, a configuration in which the supply of an electric power to the motor is shut off is employed under an over discharge state of the battery. However, when the supply of the electric power to the motor is shut off, a power steering function is not effected. Accordingly, there are problems as follows: The power steering device which has functioned even with relatively light steering force until now does not suddenly function, and thus the driver has an uneasiness or it is possible to lead to poor driver performance. Further, in the electric power steering device, when the battery is brought into the over discharge state by the operation of the power steering device, there are serious inconveniences such that a headlamp is darkened. Therefore, it is demanded to prevent the battery from being over-discharged with adequately holding the power steering function.

A device to meet the demand is disclosed in Japanese Patent: JP-B-6-15331. This device is a controller of an electric power steering device that includes a motor for assisting (steering assist) a steering force of a steering wheel, a power source (a battery) for supplying an electric power to the motor, a torque sensor for detecting a rotating deviation between a steering wheel shaft driven by the steering and a tire driving shaft, and a control part for controlling the supply of the electric power to the motor based on an output signal of the torque sensor. The control part includes a voltage detecting unit for detecting the voltage of any of feeder lines of the power source, a current limit value setting unit for setting the limit value of a current supplied to the motor based on the detected value, and a current limiting unit for limiting the current supplied to the motor not so as to exceed the current limit value.

Here, assuming that the electric power supplied from the battery is converted to a mechanical output to the motor without loss, relationship represented by the following Eq.(1) is established.

$$V \cdot I_{bat} \;=\; \tau_0 \cdot \omega \qquad\qquad\qquad (1)$$

Where, V is a source voltage supplied to the controller from the battery as the power source, $I_{bat}$ is a battery current supplied from the battery, $\tau_0$ is a motor output torque and $\omega$ is a rotating speed (angular velocity) of the motor.

In the device disclosed in JP-B-6-15331, when the source voltage V of the left side of the Equation 1 is lowered so that the supplied electric power is lowered, the motor output torque $\tau_0$ of the right side is reduced and limited to a motor output meeting the lowered supplied electric power.

However, as can be understood from the Eq. (1), the mechanical output of the motor indicates $\tau_0 \cdot \omega$. In the device disclosed in JP-B-6-15331, since the influence of the motor rotating speed $\omega$ is not considered to limit the motor output torque $\tau_0$, it is possible that the motor output torque $\tau_0$ may be excessively limited or insufficiently limited. Specifically, when the motor rotating speed $\omega$ is high, the limitation is insufficient. When the motor rotating speed $\omega$ is low, the limitation is excessive.

The present invention is devised in view of the above, and it is an object of the present invention to provide an electric power steering device in which a maximum steering assist can be carried out within an electric power supplied from a limited power source by sufficiently limiting a motor current as required in accordance with the state of the power source.

SUMMARY OF THE INVENTION

In order to achieve the object, according to a first aspect of the present invention, an electric power steering device in which a steering assist force is applied to a steering system of a vehicle using a motor, the electric power steering device comprises:

a first calculating part for calculating a steering assist command value based on a steering torque and a vehicle speed;
a drive control part that controls drive of the motor based on the steering assist command value;
a second calculating part for calculating a steering assist command limit value based on a source voltage and a motor rotating speed; and
a limiting part for limiting steering assist command value based on the steering assist command limit value.

According to a second aspect of the present invention as set forth in the first aspect of the present invention, it may be adapted that the second calculating part calculates the steering assist command limit value based on relationship that a maximum input energy is equal to a motor output energy,
the maximum input energy is based on the source voltage and a prescribed source current, and
the motor output energy is based on the steering assist command limit value and the motor rotating speed.

According to a third aspect of the present invention as set forth in the second aspect of the present invention, it may be adapted that the prescribed source current is a maximum current value that can be supplied from a power source to a controller.

According to a fourth aspect of the present invention as set forth in the second aspect of the present invention, it may be adapted that the prescribed source current is set in accordance with the source voltage.

According to the present invention, since the steering assist command limit value is obtained from the source voltage, the motor rotating speed and a balance of the input and output energies of the electric power steering device, the steering assist command value is limited based on the obtained steering assist command limit value. Even when the source voltage or the motor rotating speed changes, a steering assist operation can be carried out so as not to exceed the prescribed source current. As a result, the source voltage of the vehicle can be prevented from being excessively lowered and a service period of the power source (battery) is not shortened.

Further, since the limit value of the source current is changed in accordance with the source voltage, the voltage of the controller is not excessively lowered due to the excessive output of the electric power steering device itself. As a result, the shut down of the steering assist force due to the voltage reduction of the controller can be prevented.

BRIEF DESCRIPTION OF THE DRAWINGS

Fig. 1 is a block diagram showing a structural example of the present invention;
Fig. 2 is a block diagram showing a structural example of calculating part for calculating a motor current limit value according to the present invention;
Fig. 3 is a block diagram showing a structural example of a vector control to which the present invention can be applied;
Fig. 4 is a block diagram showing another structural example of the present invention;
Fig. 5 is a block diagram showing a structural example of a command current determining part.
Fig. 6 is a block diagram showing a structural example of a battery current limiting part according to the present invention;
Fig. 7 is a block diagram showing another structural example of a command current determining part;
Fig. 8 is a block diagram showing another structural example of a calculating part for calculating steering assist command limit value according to the present invention;
Fig. 9 is a block diagram of an ordinary electric power steering device; and
Fig. 10 is a block diagram showing a structural example of a control system of the electric power steering device.

DETAILED DESCRIPTION OF EXEMPLARY EMBODIMENT OF THE INVENTION EMBODIMENT

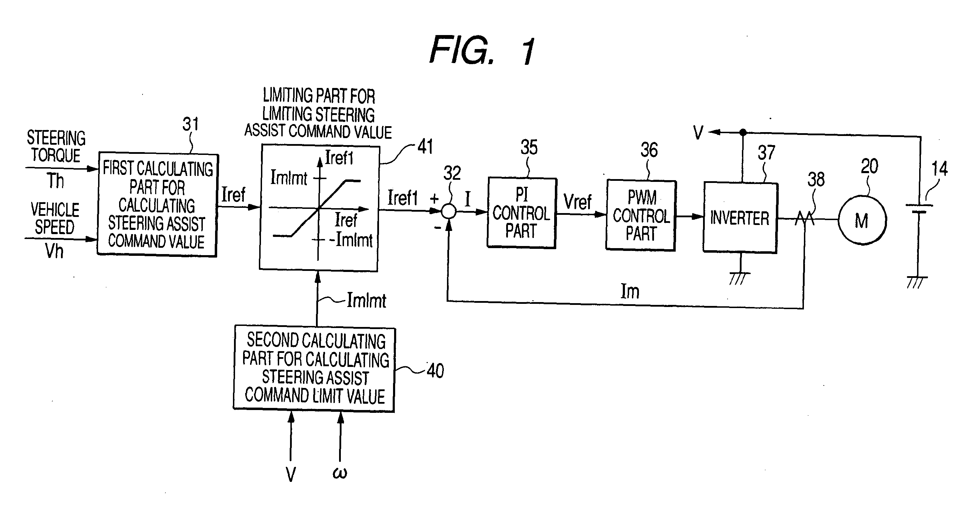

In the present invention, as shown in Fig. 1 correspondingly to Fig. 10, there are provided a second calculating part 40 for calculating a steering assist command limit value $I_{mlmt}$ based on a source voltage V and a motor rotating speed $\omega$, and a limiting part 41 for limiting a steering assist command value $I_{ref}$ by the calculated steering assist command limit value $I_{mlmt}$ to output a steering assist command value $I_{refl}$. Since the steering assist command limit value $I_{mlmt}$ is obtained from the source voltage V, the motor rotating speed $\omega$ and a balance of the input and output energies of an electric power steering device, and the steering assist command value $I_{ref}$ is limited based on the obtained steering assist command limit value $I_{mlmt}$, even when the source voltage V or the motor rotating speed $\omega$ changes, a steering assist operation can be carried out so as not to exceed a prescribed source current.
Now, a method for obtaining the steering assist command limit value $I_{mlmt}$ will be described below.
The input-output energy equation (energy balance) of the electric power steering device is represented by a below-described Eq.(2).

$$V \cdot I_{bat} \ = \ \tau_0 \cdot \omega \ + \ R \cdot I_m 2 \ + \ P_{loss} \qquad\qquad (2)$$

Where, V is a source voltage at an end of a controller, $I_{bat}$ is a battery current, $\tau_0$ is a steering assist torque, R is a resistance value of a path in which the motor current is supplied, and $P_{loss}$ is a loss such as an iron loss.
The above-described Eq.(2) can be rewritten to a below-described Eq.(3) with a torque constant as Kt.

$$V \cdot I_{bat} \ = \ Kt \cdot I_m \cdot \omega \ + \ R \cdot I_m^2 \ + \ P_{loss} \qquad\qquad (3)$$

When the battery current $I_{bat}$ is a prescribed battery current value $I_{batl}$, a below-described Eq. (4) is obtained by representing the steering assist command limit value as $I_{mlmt}$.

$$V \cdot I_{batl} \ = \ Kt \cdot I_{mlmt} \cdot \omega \ + \ R \cdot I_{mlmt}^2 \ + \ P_{loss} \qquad\qquad (4)$$

Since the steering assist command limit value $I_{mlmt}$ calculated by inputting the source voltage V and the motor rotating speed $\omega$ to the above-described Eq.(4) corresponds to the motor current for supplying the prescribed battery current value $I_{batl}$, the motor current $I_m$ is refrained from exceeding the steering assist command limit value $I_{mlmt}$. Thus, the electric power steering device can be prevented from causing the battery current larger than the prescribed battery current value $I_{batl}$.

Meanwhile, a calculation for obtaining the steering assist command limit value $I_{mlmt}$ by inputting the source voltage V and the motor rotating speed $\omega$ into the above-described Eq.(4) needs to solve a quadratic equation regarding the steering assist command limit value, so that it takes a calculating process time to lengthen a process cycle. Therefore, the limitation of the motor current $I_m$ may be delayed to supply the battery current larger than the prescribed battery current value $I_{bat1}$. To prevent such an inconvenience, in the present invention, the calculation is carried out as described below to shorten the calculating process time.

Firstly, when the source voltage V is a prescribed source voltage $V_1$, the above-described Eq. (4) is changed to an Eq. (5) .

$$V_1 \cdot I_{bat1} = Kt \cdot I_{mlmt} \cdot \omega + R \cdot I_{mlmt}^2 + P_{loss} \qquad (5)$$

A look up table having the motor rotating speed $\omega$ as an input and the steering assist command limit value $I_{mlmt}$ as an output is previously obtained in an off-line using the Eq.(5). In this case, since the input is the motor rotating speed $\omega$, the output is the steering assist command limit value $I_{mlmt}$ and others are constants, the look up table can be previously obtained. The look up table is accessed by the motor rotating speed $\omega$ to output such a steering assist command limit value $I_{mlmt}$ so as to satisfy the Eq.(5).

Then, assuming that a prescribed rotating speed of the motor rotating speed $\omega$ is $\Delta\omega_1$ when a difference between the prescribed source voltage $V_1$ and the source voltage V is a prescribed voltage difference $\Delta V_1$, Eq.(6) is established as described below.

$$\Delta V \cdot I_{bat1} = Kt \cdot I_{mlmt} \cdot \Delta\omega_1 \qquad (6)$$

The Eq.(6) can be rewritten as below-described Eq. (7) .

$$\Delta\omega_1 = (\Delta V_1 \cdot I_{bat1}) / Kt \cdot 1 / I_{mlmt} \qquad (7)$$

A look up table for inputting the steering assist command limit value $I_{mlmt}$ and outputting the prescribed rotating speed $\Delta\omega_1$ is previously obtained in an off-line using the Eq.(7). In this case, since the input is the steering assist command limit value $I_{mlmt}$ and output is the prescribed rotating speed $\Delta\omega_1$ and others are constants, the look up table can be previously obtained. Assuming that the change of the motor rotating speed $\omega$ caused by the difference between the prescribed source voltage $V_1$ and the source voltage V is $\Delta\omega$, the change $\Delta\omega$ of the motor rotating speed $\omega$ is represented by a below-described Eq. (8) using the prescribed rotating speed $\Delta\omega_1$ of the motor rotating speed $\omega$ when the difference between the prescribed source voltage $V_1$ and the source voltage V is the prescribed voltage difference $\Delta V_1$.

$$\Delta\omega = (V_1 - V) / \Delta V_1 \cdot \Delta\omega_1 \qquad (8)$$

The steering assist command limit value $I_{mlmt}$ corresponding to an arbitrary source voltage can be obtained using the above-described Eq. (5), (7) and (8). As a result, a below-described Eq. (9) in which $\omega' = \omega + \Delta\omega$ is substituted for the motor rotating speed $\omega$ in the Eq.(5) is equivalent to the Eq.(4).

$$V_1 \cdot I_{bat1} = Kt \cdot I_{mlmt} \cdot \omega' + R \cdot I_{mlmt}^2 + P_{loss} \qquad (9)$$

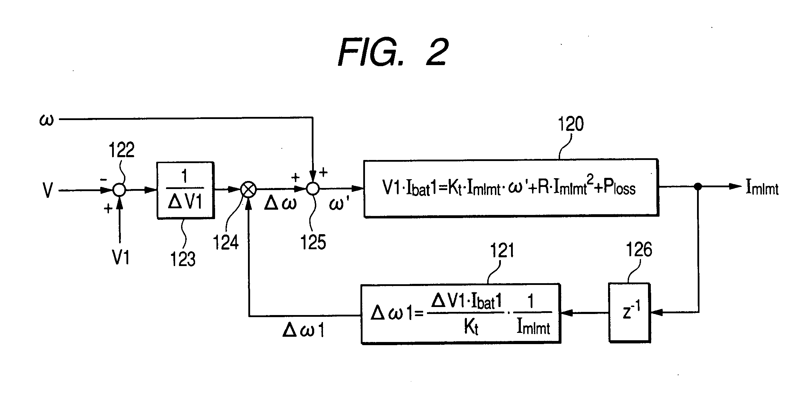

Since the above-described Eqs. (5), (7) and (8) cannot be solved at the same time, the second calculating part 40 has a calculating block structure as shown in Fig. 2.

In Fig. 2, a steering assist command limit value $I_{mlmt}$ before one sample that passes a backward shift operator 126 is inputted to a calculating block 121. The calculating block 121 obtains the prescribed rotating speed $\Delta\omega_1$ based on the above-described Eq. (7) . The prescribed rotating speed $\Delta\omega_1$ and the source voltage V are processed to calculate the change $\Delta\omega$ of the motor rotating speed $\omega$ based on the Eq. (8) via a subtracting part 122, a gain part 123 and a multiplying part 124. The change $\Delta\omega$ of the motor rotating speed $\omega$ and the motor rotating speed $\omega$ are inputted to an adding part 125 to calculate the motor rotating speed $\omega'$, and the motor rotating speed $\omega'$ is inputted to a calculating block 120. The calculating block 120 obtains the steering assist command limit value $I_{mlmt}$ based on the above-described Eq. (5) .

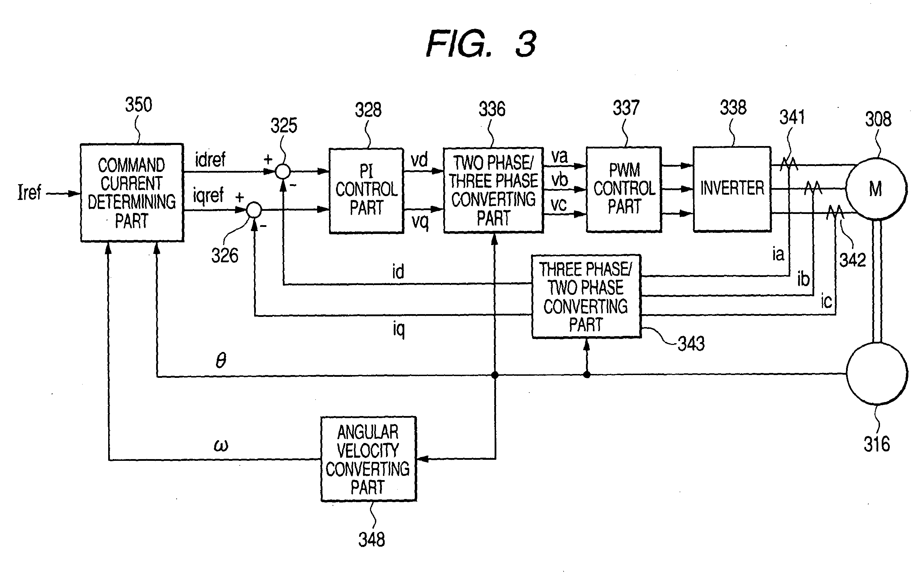

The present invention can be applied to a vector controlled electric power steering device. An ordinary vector control (see e.g., Japanese Patent Unexamined Publication: JP-A-2001-18822) is described by referring to Fig. 3. Generally, in the vector control, when a three-phase motor is controlled, a current command value is separated into two-axis components of a d-axis (an exciting component) and a q-axis (a torque component). A feedback current of a motor is decomposed to the d-axis and q-axis components from the three-phases to carry out a PI control. Finally, when a gate signal is supplied to an inverter, a two/three phase conversion is carried to control the three-phase motor.

In Fig. 3, in a command current determining part 350, current command values $i_{dref}$ and $i_{qref}$ of the d-axis and the q-axis are calculated on the basis of the steering assist command value $I_{ref}$. On the other hand, motor currents $i_a$, $i_b$ and $i_c$ of a motor 308 are detected in current detecting parts 341 and 342. The detected currents $i_a$, $i_b$ and $i_c$ are converted into currents $i_d$ and iq of the two d-q axes in a three phase/two phase converting part 343. In subtracting parts 325 and 326, deviating currents between the current command values $i_{dref}$ and $i_{qref}$ of the d-axis and the q-axis and the feedback currents $i_d$ and $i_q$ are calculated. The deviating currents are inputted to a PI control part 328 to calculate voltage command values $v_d$ and $v_q$ that reduce the deviating currents to 0. The motor 308 is a three-phase motor and the voltage command values $V_d$ and $v_q$ are converted into voltage command values $v_a$, $v_b$ and $v_c$ by a two phase/three phase converting part 336.

A PWM control part 337 generates a gate signal PWM controlled based on the voltage command values $v_a$, $v_b$ and $v_c$ of the three phases. An inverter 338 is driven by the gate signal generated by the PWM control part 337. To the motor 308, such a current so as to reduce the deviating current to 0 is supplied. An angle A (a rotating position) of the motor 308 is detected by a resolver 316. The motor rotating speed $\omega$ is calculated from the angle $\theta$ in an angular velocity converting part 348 and used for the vector control.

In such a vector control, a field weakening control is used in a high speed rotating area of the motor.

Here, the motor 308 is vector-controlled based on the steering assist command value $I_{ref}$ calculated in accordance with a steering torque (or a vehicle speed) detected in a torque sensor 307. When the vector control is represented by an Equation, the vector control is represented by a below-described Eq.(10) or (11). The Eq.(10) represents the case where the field weakening control is not carried out ($i_d$ =0) and the Eq.(11) represents the case where the field weakening control ($i_d \neq 0$) is carried out.

$$i_q = I_{ref} \text{ and } i_d = 0 \qquad\qquad (10)$$

$$i_q = I_{ref} \text{ and } i_d \neq 0 \qquad\qquad (11)$$

On the other hand, when a motor current $I_s$ is represented by a d-axis current command value $i_d$ and a q-axis current command value $I_q$, below-described Eq. (12) is obtained.

$$Is = \sqrt{(Iq^2 + Id^2)} \qquad\qquad (12)$$

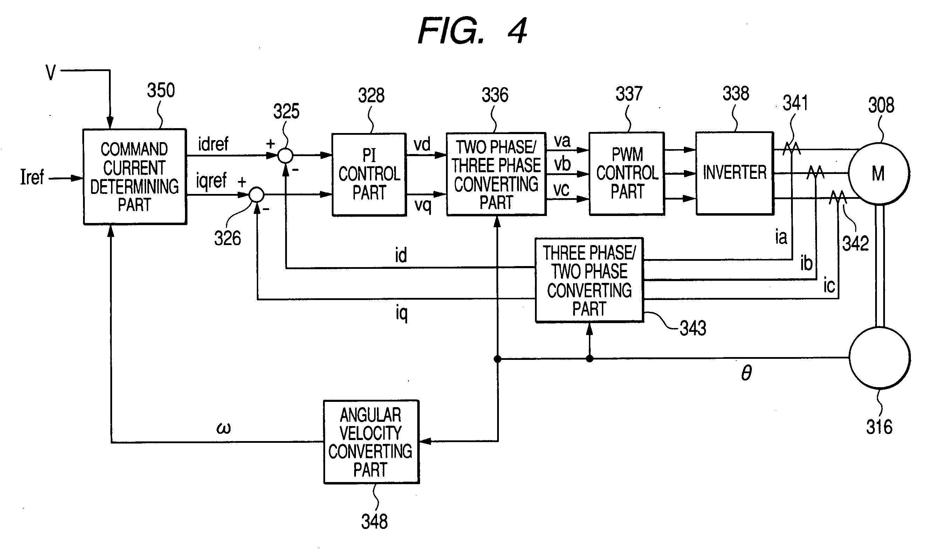

When the present invention is applied to the electric power steering device of the above-described vector control system, a configuration shown in Fig. 4 corresponding to that of Fig. 3 is provided. Specifically, a steering assist command value $I_{ref}$, a source voltage V and a motor rotating speed $\omega$ are inputted into a command current determining part 350 so as to determine current command values $i_{dref}$ and $i_{qref}$ of d-q axes. Further, an angle $\theta$ is inputted into a two phase/three phase converting part 336 and a three phase/two phase converting part 343.

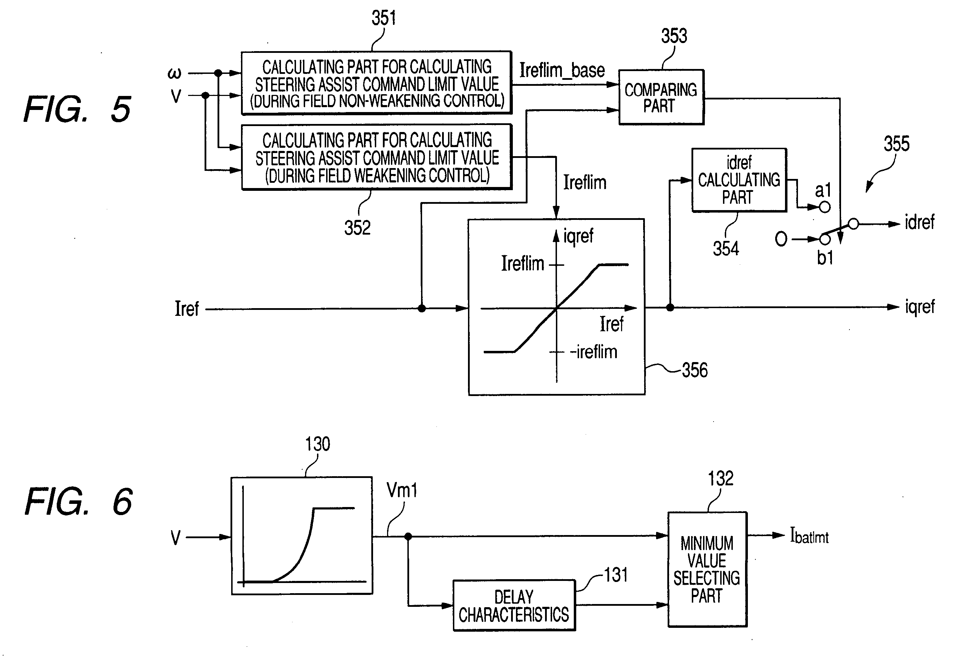

The command current determining part 350 has a configuration shown in Fig. 5 and includes a calculating part for calculating steering assist command limit value 351 during a field non-weakening control, a calculating part for calculating steering assist command limit value. 352 during a field weakening control, a comparing part 353 for comparing a steering assist command limit value $I_{reflim\_base}$ calculated in the calculating part for calculating steering assist command limit value 351 with the steering assist command value $I_{ref}$, a limiting part for limiting steering assist command value 356 for limiting the steering assist command value $I_{ref}$ based on a steering assist command limit value $I_{reflim}$ calculated in the calculating part for calculating steering assist command limit value 352, an $i_{dref}$ calculating part 354 for calculating the current command value $i_{dref}$ based on the current command value $i_{qref}$ from the limiting part for limiting steering assist command value 356, and a switching part 355 for switching the $i_{dref}$ from the $i_{dref}$ calculating part 354 or 0 based on a result from the comparing part 353 to output the current command value $i_{dref}$ of the d-axis.

The calculating part for calculating steering assist command limit value 351 calculates the steering assist command limit value $I_{reflim\_base}$ in accordance with a below-described Eq.(13).

$$(-\omega \cdot L_d \cdot I_{reflim\_base})^2 + (I_{reflim\_base} \cdot R + \omega \cdot \Psi)^2 = (V_{max})^2 \qquad (13)$$

Where, Ld is a d-axis inductance of the motor, R is a motor phase resistance, $\Psi$ is a magnetic flux acting on the d-axis. Assuming that $k_s$ is a safety coefficient showing a modulation technique, a maximum source voltage $V_{max} = (V/2) k_s$.

Further, the calculating part for calculating steering assist command limit value 352 calculates the steering assist command limit value $I_{reflim}$ based on below-described Eq.(14).

$$(I_{dlim} \cdot R - \omega \cdot L_d \cdot I_{reflim})^2 + (I_{reflim} \cdot R + \omega \cdot L \cdot I_{dlim} + \omega \cdot \Psi)^2 = (V_{max})^2 \quad (14)$$

As described above, the maximum source voltage $V_{max} = (V/2)k_s$, $I_{dlim}$ is a function for obtaining the d-axis current command value $i_{dref}$ from the q-axis current command value $i_{qref}$, and the d-axis current command value $i_{dref}$ is obtained from $I_{dlim} = f(I_{reflim})$ using $i_{dref} = f(i_{qref}) \cdot I_{ref}$

In the above-described configuration, the steering assist command limit value $I_{reflim}$ calculated in the calculating part for calculating steering assist command limit value 352 is inputted into the limiting part for limiting steering assist command value 356 to limit the steering assist command value $I_{ref}$ in accordance with the steering assist command limit value $I_{reflim}$. The q-axis current command value $i_{qref}$ as the limited steering assist command value is inputted to the $i_{dref}$ calculating part 354. Further, the comparing part 353 compares the steering assist command limit value $I_{reflim\_base}$ with the steering assist command value $I_{ref}$ to switch the switching part 355 so that:

when $I_{ref} > I_{reflim\_base}$, the current command value $i_{dref}$ is connected to a contact a1;
when $I_{ref} \leq I_{reflim\_base}$ the current command value $i_{dref}$ is connected to a contact b1.
Accordingly, when $I_{ref} > I_{reflim\_base}$, the current command value $i_{dref}$ calculated in the $i_{dref}$ calculating part 354 is outputted as the d-axis current command value $i_{dref}$, and when $I_{ref} \leq I_{reflim\_base}$, the d-axis current command value $I_{ref} = 0$.
Further, below-described Eq. (15) is obtained as an equation under the vector control corresponding to the above-described Eq.(3).

$$V \cdot I_{bat} = K_t \cdot i_q \cdot \omega + R \cdot (i_q + i_d)^2 + P_{loss} \qquad (15)$$

An equation under the vector control corresponding to the above-described Eq. (4) is below-described Eq. (16), and Eq. (17) is obtained in accordance with $i_{dLMT} = f(I_{qLMT})$.

$$V \cdot I_{bat1} = K_t \cdot I_{qLMT} \cdot \omega + R \cdot (I_{qLMT} + i_{dLMT})^2 + P_{loss} \qquad (16)$$

$$V \cdot I_{bat1} \ = \ K_t \cdot I_{qLMT} \cdot \omega \ + \ R \cdot (I_{qLMT} \ + \ f(I_{qLMT}))^2 \ + \ P_{loss} \qquad (17)$$

An equation under the vector control corresponding to the above-describedEq. (5) is below-describedEq. (18) .
$$V_1 \cdot I_{bat1} \ = \ K_t \cdot I_{qLMT} \cdot \omega \ + \ R \cdot (I_{qLMT} \ + \ f(I_{qLMT}))^2 \ + \ P_{loss} \qquad (18)$$

An equation under the vector control corresponding to the above-described Eq. ; (6) is below-described Eq. (19).
$$\Delta V_1 \cdot I_{bat1} \ = \ K_t \cdot I_{qLMT} \cdot \Delta \omega_1 \qquad\qquad (19)$$

Below-described Eq. (20) is obtained as an equation under the vector control corresponding to the above-described Eq. (7).
$$\Delta \omega_1 \ = (\Delta V_1 \cdot I_{bat1}) / K_t \cdot (1 / I_{q1LM}) \qquad\qquad (20)$$

As an equation under the vector control corresponding to the above-described Eq. (9), below-described Eq.(21) is obtained.
$$V_1 \cdot I_{bat1} \ = \ K_t \cdot I_{qLMT} \cdot \omega' \ + \ R \cdot (I_{qLMT} \ + \ f(I_{qLMT}))^2 \ + \ P_{loss} \qquad (21)$$

Next, the case where the battery current $I_{bat}$ is limited in accordance with the source voltage V to obtain the steering assist command limit value $I_{mlmt}$ will be described.

According to the present invention, output characteristics of a battery current limit value $I_{batlmt}$ in accordance with the source voltage is obtained from a table reference or a linear interpolation. When the battery current $I_{bat}$ is limited, the fall of the source voltage V is suppressed so that the shut down of the electric power steering device due to the fall of the source voltage V can be suppressed. However, when the battery current $I_{bat}$ is abruptly limited in accordance with the source voltage V, a below-described cycle is repeated. That is, after the battery current is limited, the voltage is recovered so that a steering operation can be carried out, and then, the voltage is lowered again by the steering to cause a hunting or vibration in steering. To prevent such a phenomenon, in the present invention, a delay is provided in limiting characteristics. The delay is not provided in a limiting direction to restrict the battery current and delay characteristics are provided only in a direction for recovering the limitation. The delay characteristics are realized by a delay for a prescribed time or a delay by a filter.

Fig. 6 shows the configuration of a battery current limiting part for limiting the battery current $I_{bat}$ when the voltage falls as described above. The source voltage V is inputted to a voltage limiting part 130 for limiting a maximum value and a source voltage $V_{m1}$ whose maximum value is limited is inputted to a minimum value selecting part 132 and a delay characteristic part 131. A source voltage $V_{m2}$ having a delay generated in the delay characteristic part 131 is also inputted to the minimum value selecting part 132. The minimum value selecting part 132 selects a smaller one of the source voltage $V_{m1}$ and the source voltage $V_{m2}$ to output the smaller source voltage as the battery current limit value $I_{batlmt}$. Since the smaller source voltage is selected and outputted, a response of a limited side can be made to be fast and a response of the case where the limitation is released can be delayed.

In order to limit the battery current $I_{bat}$ to an arbitrary battery current limit value $I_{batlmt}$ or lower, the battery current $I_{bat}$ of the Eq. (3) is not set to the prescribed battery current value $I_{bat1}$ as shown in the Eq. (5), but the battery current $I_{bat}$ needs to be treated as a variable. This battery current is considered in the same manner as that when the source voltage V changes. Assuming that the change of the motor rotating speed $\omega$ is $\Delta \omega_{i1}$ when the difference between the battery current limit value $I_{batlmt}$ and the prescribed battery current value $I_{bat1}$ of the Eq. (5) is a prescribed value $\Delta I_{bat1}$, Eq. (22) is established as described below.

$$V_1 \cdot \Delta I_{bat1} \doteq Kt \cdot I_{mlmt} \cdot \Delta \omega_{i1} \qquad (22)$$

The Eq.(22) can be rewritten to an Eq.(23).

$$\Delta \omega_{i1} = (V_1 \cdot \Delta I_{bat1}) / Kt \cdot 1/I_{mlmt} \qquad (23)$$

Here, when $V_1 \cdot \Delta I_{bat1} = AV_1 \cdot I_{bat1}$ is set, the Eq. (23) is the same as the Eq.(7). Thus, the look up table of the Eq. (7) can be directly used, and an output is $\Delta \omega_1$. Assuming that the change of the motor rotating speed $\omega$ due to the difference between the battery current limit value $I_{batlmt}$ and the prescribed battery current value $I_{bat1}$ is $\Delta \omega_{i1}$, a below-described Eq. (24) is established using the change $\Delta \omega_{il}$ of the motor rotating speed $\omega$.

$$\Delta \omega_i = (I_{bat1} - I_{bat1mt}) / \Delta I_{bat1} \cdot \Delta \omega_1 \qquad (24)$$

When the change of the motor rotating speed $\omega$ is used and an arbitrary source voltage V and an arbitrary battery current limit value $I_{batlmt}$ are also used, the steering assist command limit value $I_{mlmt}$ is obtained from an Eq. (25) by substituting $\omega'' = \omega + \Delta \omega + \Delta \omega_i$ for the Eq. (5)

$$V_1 \cdot I_{bat1} \doteq Kt \cdot I_{mlmt} \cdot \omega'' + R \cdot I_{mlmt}^2 + P_{loss} \qquad (25)$$

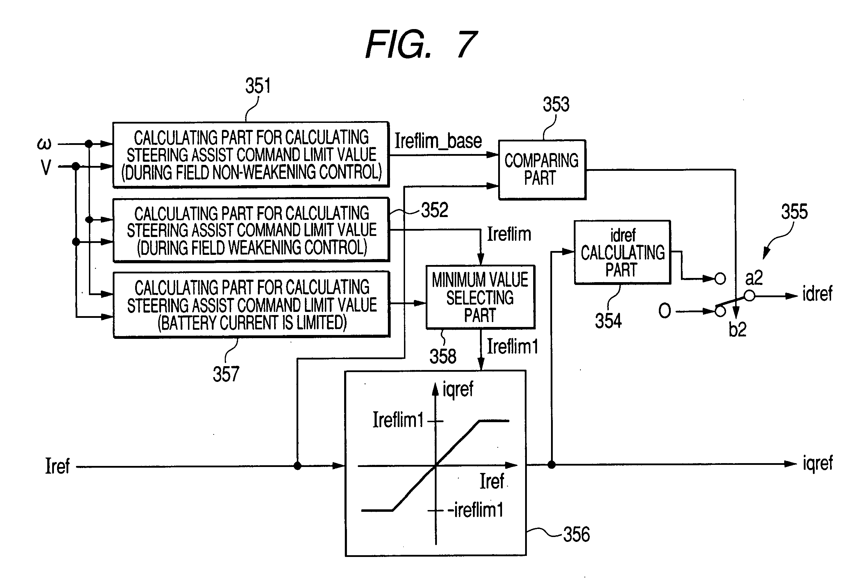

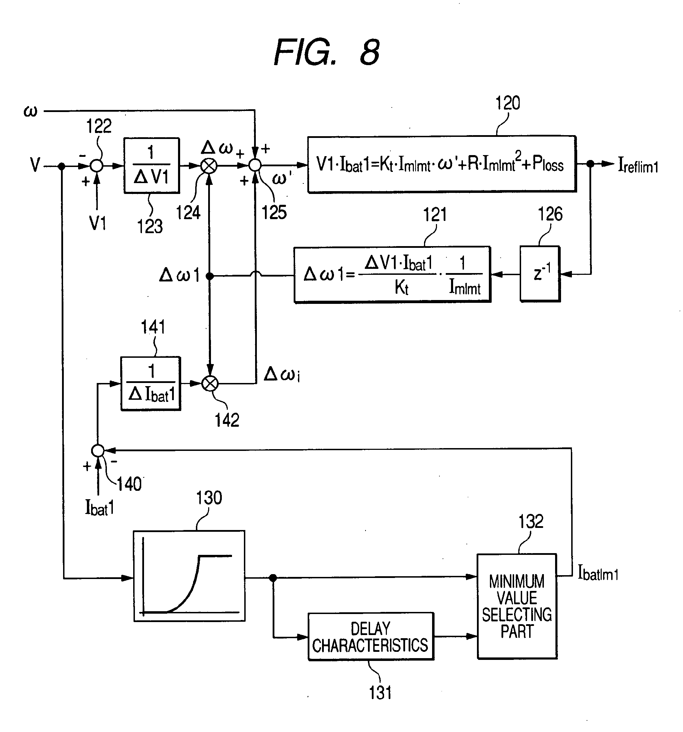

In this case, a connecting relation of a calculating part for calculating steering assist command limit value 357 is shown in Fig. 7, and may be applied to the configuration of Fig. 2 and have a configuration of Fig. 8 . When the detail of the calculating part for calculating steering assist command limit value 357 is shown in Fig. 2, a prescribed source current has a maximum current value that can be supplied to a controller from a power source. When the detail of the calculating part for calculating steering assist command limit value357 is shown in Fig. 8, the prescribed source current is set in accordance with the source voltage.

In Fig. 7, a comparing part 353 and a switching part 355 operate in the same manner as that of Fig. 5. The comparing part 353 compares the steering assist command limit value $I_{reflim\_base}$ with the steering assist command value $I_{ref}$ to switch the switching part 355 so that:

when $I_{ref} > I_{reflim\_base}$, the current command value $i_{dref}$ is connected to a contact a2;
when $I_{ref} \leq I_{reflim\_base}$, the current command value $i_{dref}$ is connected to a contact b2.
Accordingly, when $I_{ref} > I_{reflim\_base}$, the current command value $i_{dref}$ calculated in the $i_{dref}$ calculating part 354 is outputted as the d-axis current command value $i_{dref}$, and when $I_{ref} \leq I_{reflm\_base}$ the d-axis current command value $i_{dref} = 0$.

Further, in Fig. 8, the battery current limit value $I_{batlmt}$ from the minimum value selecting part 132 of the battery current limiting part is inputted into a subtracting part 140 and subtracted relative to the prescribed battery current value $I_{batl}$ . A subtracted value is inputted to a transfer function part 141 of $1/\Delta I_{bat1}$. An output (= $(I_{bat1} - I_{batlmt})/\Delta I_{bat1}$) of the transfer function part 141 is inputted to a multiplying part 142. The change $\Delta \omega_1$ from the calculating block 121 is inputted to the multiplying part 142. A multiplied result $\Delta \omega_i$ in the multiplying part 142 is added in an adding part 125. In this case, an output $I_{refliml}$ of a calculating block 120 is the steering assist command limit value.

Further, in a brush-less motor, a q-axis current limit value $I_{qlmt}$ and a d-axis current limit value $I_{qlmt}$ in accordance with the vector control are used to obtain a below-described Eq.(26).

$$V_1 \cdot I_{bat1} = K_t \cdot I_{qLMT} \cdot \omega'' + R \cdot (I_{qLMT} + f(I_{qLMT}))^2 + P_{loss} \qquad (26)$$

The Eq.(26) corresponds to the equation under the vector control of the Eq.(25). Similarly, the Eq.(21) corresponds to the equation under the vector control of the Eq.(9).

While the invention has been described in connection with the exemplary embodiment, it will be obvious to those skilled in the art that various changes and modification may be made therein without departing from the present invention, and it is aimed, therefore, to cover in the appended claim all such changes and modifications as fall within the true spirit and scope of the present invention.

[Fig. 1]
31... first calculating part for calculating steering assist command value
41.... limiting part for limiting steering assist command value
40... second calculating part for calculating steering assist command limit value
35..PI control part
36...PWM control part
37.. inverter
$T_H$... steering torque
$V_h$... vehicle speed

[Fig. 3]
350....command current determining part
328...PI control part
336...two phase/three phase converting part
337...PWM control part
338 ... inverter
343....three phase/two phase converting part
348... angular velocity converting part

[Fig. 4]
3 50... command current determining part
328...PI control part
336...two phase/three phase converting part
337...PWM control part
338 ... inverter
343....three phase/two phase converting part
348... angular velocity converting part

[Fig. 5]
3 51... calculating part for calculating steering assist command limit value (during field non-weakening control)
352... calculating part for calculating steering assist command limit value (during field weakening control)
353... comparing part
354..$i_{dref}$ calculating part

[Fig. 6]
131....delay characteristics
132... minimum value selecting part

[Fig.7]
351... calculating part for calculating steering assist command limit value (during field non-weakening control)
352... calculating part for calculating steering assist command limit value (during field weakening control)
357... calculating part for calculating steering assist command limit value (battery current is limited)
353 ... comparing part
354..$i_{dref}$ calculating part
358....minimum value selecting part

[Fig. 8]

131....delay characteristics
132... minimum value selecting part

[Fig. 9]
10... torque sensor
3 ... reduction gear
20... motor
12... vehicle speed sensor
30... control unit
14..battery

[Fig. 10]
31... first calculating part for calculating steering assist command value
35..PI control part
36...PWM control part
3 7.. inverter
$T_H$... steering torque
$V_h$... vehicle speed

**Claims**

1. An electric power steering device in which a steering assist force is applied to a steering system of a vehicle using a motor, the electric power steering device comprising:

   a first calculating part for calculating a steering assist command value based on a steering torque and a vehicle speed;
   a drive control part that controls drive of the motor based on the steering assist command value;
   a second calculating part for calculating a steering assist command limit value based on a source voltage and a motor rotating speed; and
   a limiting part for limiting steering assist command value based on the steering assist command limit value.

2. An electric power steering device according to Claim 1, wherein
   the second calculating part calculates the steering assist command limit value based on relationship that a maximum input energy is equal to a motor output energy,
   the maximum input energy is based on the source voltage and a prescribed source current, and
   the motor output energy is based on the steering assist command limit value and the motor rotating speed.

3. An electric power steering device according to Claim 2, wherein the prescribed source current is a maximum current value that can be supplied from a power source to a controller.

4. An electric power steering device according to Claim 2, wherein the prescribed source current is set in accordance with the source voltage.

# FIG. 1

STEERING TORQUE Th

VEHICLE SPEED Vh

**31** FIRST CALCULATING PART FOR CALCULATING STEERING ASSIST COMMAND VALUE

Iref

LIMITING PART FOR LIMITING STEERING ASSIST COMMAND VALUE **41**

Iref1 / Imlmt / Iref / -Imlmt

Iref1

**32** +  −  I

**35** PI CONTROL PART

Vref

**36** PWM CONTROL PART

**37** INVERTER

**38**

**20** M

**14**

V

Im

Imlmt

**40** SECOND CALCULATING PART FOR CALCULATING STEERING ASSIST COMMAND LIMIT VALUE

V     ω

EP 1 892 174 A1

FIG. 2

*FIG. 3*

# FIG. 4

EP 1 892 174 A1

FIG. 5

FIG. 6

# FIG. 7

CALCULATING PART FOR CALCULATING STEERING ASSIST COMMAND LIMIT VALUE (DURING FIELD NON-WEAKENING CONTROL) — 351

CALCULATING PART FOR CALCULATING STEERING ASSIST COMMAND LIMIT VALUE (DURING FIELD WEAKENING CONTROL) — 352

CALCULATING PART FOR CALCULATING STEERING ASSIST COMMAND LIMIT VALUE (BATTERY CURRENT IS LIMITED) — 357

COMPARING PART — 353

idref CALCULATING PART — 354

MINIMUM VALUE SELECTING PART — 358

Ireflim_base

Ireflim

Ireflim1

iqref

Ireflim1

Iref

-ireflim1

Iref

iqref

idref

a2

b2

355

356

Iref

$\omega$

V

EP 1 892 174 A1

# FIG. 8

$$V1 \cdot I_{bat1} = K_t \cdot I_{mlmt} \cdot \omega' + R \cdot I_{mlmt}^2 + P_{loss}$$

$$\Delta\omega1 = \frac{\Delta V1 \cdot I_{bat1}}{K_t} \cdot \frac{1}{I_{mlmt}}$$

# FIG. 9

## FIG. 10

## EUROPEAN SEARCH REPORT

European Patent
Office

Application Number

EP 07 01 6666

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2006/098516 A (NSK LTD [JP]; TA CAOMINH [JP]; JIANG CHUNHAO [JP]; KOBAYASHI HIDEYUKI) 21 September 2006 (2006-09-21) * abstract * | 1-4 | INV. B62D5/04 |
| E | -& EP 1 860 766 A (NSK LTD [JP]) 28 November 2007 (2007-11-28) * paragraphs [0034] - [0037] * ----- | 1-4 | |
| X | US 2003/057913 A1 (MATSUSHITA MASAKI [JP] ET AL) 27 March 2003 (2003-03-27) * paragraphs [0011] - [0022] * ----- | 1-4 | |
| X | JP 2005 007991 A (UNISIA JKC STEERING SYSTEM CO) 13 January 2005 (2005-01-13) * abstract * ----- | 1-4 | |
| X | GB 2 177 358 A (HITACHI LTD; HITACHI AUTOMOTIVE ENG) 21 January 1987 (1987-01-21) * page 1, lines 54-94 * ----- | 1-4 | |
| A,D | JP 2001 018822 A (TOYOTA MOTOR CORP) 23 January 2001 (2001-01-23) * abstract * ----- | 1-4 | TECHNICAL FIELDS SEARCHED (IPC) B62D |

The present search report has been drawn up for all claims

| Place of search | Date of completion of the search | Examiner |
|---|---|---|
| Berlin | 3 December 2007 | Nielles, Daniel |

EPO FORM 1503 03.82 (P04C01)

## ANNEX TO THE EUROPEAN SEARCH REPORT
## ON EUROPEAN PATENT APPLICATION NO.

EP 07 01 6666

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2007

| Patent document cited in search report | | Publication date | Patent family member(s) | | Publication date |
|---|---|---|---|---|---|
| WO 2006098516 | A | 21-09-2006 | EP | 1860766 A1 | 28-11-2007 |
| EP 1860766 | A | 28-11-2007 | WO | 2006098516 A1 | 21-09-2006 |
| US 2003057913 | A1 | 27-03-2003 | DE | 10205886 A1 | 03-04-2003 |
| | | | JP | 3480843 B2 | 22-12-2003 |
| | | | JP | 2003079181 A | 14-03-2003 |
| JP 2005007991 | A | 13-01-2005 | NONE | | |
| GB 2177358 | A | 21-01-1987 | DE | 3619703 A1 | 02-01-1987 |
| | | | JP | 2053540 C | 23-05-1996 |
| | | | JP | 6015331 B | 02-03-1994 |
| | | | JP | 61285171 A | 15-12-1986 |
| | | | US | 4756375 A | 12-07-1988 |
| JP 2001018822 | A | 23-01-2001 | JP | 3433701 B2 | 04-08-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006229624 A
- JP 6015331 B

- JP 2001018822 A